# EUROPEAN PATENT APPLICATION

(11) **EP 1 100 212 A1**
(43) Date of publication of application: **16.05.2001**
(21) Application number: 99308912.7
(22) Date of filing: 09.11.1999
(51) Int. Cl.: H04B 7/04, H04B 1/713

(54) **Transmitting/receiving apparatus for electromagnetic signals**

(71) Applicant: LUCENT TECHNOLOGIES INC., Murray Hill, New Jersey 07974-0636 (US)
(72) Inventor: Ritter, Kai-Uwe, 901154 Roth (DE)
(74) Representative: Williams, David John

(57) **Abstract**

The invention relates to a transmitting/receiving apparatus for electromagnetic signals which combines signals transmitted by four transmitters by means of two hybrid and/or broadband combiners. The broadband combiners comprise two filters which define frequency ranges within which the respectively assigned transmitters can transmit. The filters cover in particular a plurality of frequency channels, with the result that synthesizer hopping is possible.

The invention furthermore relates to a method for combined synthesizer and baseband hopping which is particularly advantageous for the apparatus according to the invention in order to ensure effective channel utilization.

## Description

The invention relates to a transmitting/receiving apparatus for electromagnetic signals in general and to transmitting/receiving apparatuses for base stations of the mobile radio network in particular, and also to a method for frequency hopping within links for the transmission of electromagnetic signals.

Mobile telecommunications, in particular by means of radio telephones, is growing in importance and forms a greatly expanding market. In this context, the Global System for Mobile Communications (GSM) Standards, e.g. GSM900 and GSM1800, are typically used. In order to establish a link between a mobile radio telephone and the wire-bound telecommunications network or other radio telephones, base stations are typically used as interfaces. In this case, a base station generally serves for transmitting and receiving electromagnetic signals, for which purpose specific frequencies are available, typically within separate transmission and reception bands. The transmission and reception bands contain a multiplicity of so-called channels, the frequency of a transmission channel serving as a carrier for the transmission of signals of a specific link e.g. between a base station and a mobile radio telephone. Each mobile radio operator is allocated a limited number of channels and, consequently, seeks to utilize them optimally.

Base stations are usually subdivided into a plurality of transmitting/receiving cells. A transmitting/receiving cell is furthermore subdivided into a transmission path and a reception path, which are connected to a common transmitting and receiving antenna via a diplexer. The transmission path of a typical transmitting/receiving cell contains a plurality of transmitters with transmission amplifiers (so-called power amplifiers), it being possible for each transmitter to control a radio link at a point in time. In order not to have to supply a diplexer, an antenna lead and an antenna for each transmitter, it is customary to combine four transmitters which are connected in parallel. This parallel arrangement is connected to a diplexer and an antenna system, thereby producing a transmitting/receiving device with four transmitters. For this purpose, it is known for in each case two of the four transmitters to be connected by means of a respective hybrid combiner and for the two pairs that are produced as a result of this to be connected by means of a further hybrid combiner. The signals brought together in this way by means of the binary-hierarchical combination of hybrid combiners are then fed to the antenna system via the diplexer. A typical transmitting/receiving cell comprises two of the transmitting/receiving apparatuses described above and consequently contains two diplexers and two antenna systems. Such a cell can transmit simultaneously on eight different channels. Each transmitter can, in principle, transmit within a specific interval of channels (typically up to approximately a few hundred channels). In this case, the time axis is subdivided into individual time intervals (so-called time slots) approximately 500 µs in length. In order to optimally utilize the limited number of available channels and not to permanently impair a link as a result of possible interference at a specific frequency, a transmitter can change over to another free channel from one time interval to the next. In this case, a link remains assigned to the same transmitter throughout the duration of the link. This method is referred to as synthesizer hopping. In general, a method in which a link changes over the carrier frequency from time interval to time interval is referred to as frequency hopping in this context.

The amplifiers used in the transmitters usually have an output power of 40 W. A hybrid combiner theoretically causes attenuation of at least 3 dB, but in practice even high-quality hybrid combiners typically reach approximately 3.3 dB. Furthermore, the diplexer causes a further 1 dB and the cabling another 1 dB attenuation of the signal. A total attenuation of approximately 8.6 dB is thus reached. Therefore, the power that is actually available at the antenna terminal is only approximately 5.5 W, in other words, in an extremely disadvantageous manner, of the amplifier power used only 14% is available as transmission power and approximately 86% is lost, due to the attenuation, as heat loss in the various components. Consequently, in the case of the described transmitting/receiving cell with eight transmitters, the heat loss just in the hybrid combiners amounts to approximately 250 W in total.

Moreover, there is a significant interest in transmission systems having an output power of at least 10 W per channel. One option for complying with this demand would be to increase the amplifier power by approximately 82%. However, such a power increase would be associated with distinctly higher costs for the amplifiers, a higher current consumption and an even higher power loss with thermal problems resulting from this.

Consequently, one object of the invention consists in providing a transmitting/receiving apparatus having, by comparison with the prior art, an improved ratio of amplifier power used to transmission power radiated, which enables highly variable frequency hopping.

A further object of the invention consists in providing a method for frequency hopping, in particular for transmitting/receiving apparatuses with a high degree of variability.

The objects are already achieved, in a surprisingly simple manner, by the transmitting/receiving apparatus defined in Claim 1, and the method defined in Claim 11.

The transmitting/receiving apparatus according to the invention serves for combining electromagnetic signals broadcast by four transmitters, the latter each comprising an output. Furthermore, a first and second combiner each having two inputs are provided, and a respective one of these inputs is assigned to a respective one of the four transmitter outputs. Moreover, each of the two combiners comprises an output, a respective one of these two outputs being assigned to a respective input of a third combiner. Furthermore, the third combiner comprises an output assigned to an antenna for the transmission of the signals. At least one of the combiners is designed as a broadband combiner which comprises a first and second filter for electromagnetic signals or preferably essentially comprises a first and second filter. The first and second filters allow signals of a first and second frequency range, respectively, to pass. The first and/or second frequency range cover a plurality of transmission channels, with the result that at least some of the four transmitters can carry out synthesizer hopping within the respective frequency range. The filters in the broadband combiner serve for separating the signals present at the outputs of the two hybrid combiners. The attenuation of the broadband combiner is distinctly less than the attenuation of a hybrid combiner. As a result, the power loss in the apparatus according to the invention is distinctly reduced, in an extremely advantageous manner, by comparison with the prior art, which leads to less thermal loading.

At the same time, it is advantageously possible to provide an increased radiated transmission power by comparison with the prior art, given the same amplifier power. Furthermore, the broadband combiner provides good separation of the signals of the first and second frequency ranges.

In addition to synthesizer hopping, the apparatus according to the invention enables a link to be changed over from one of the four transmitters to another. This method is also referred to as baseband hopping. Therefore, the apparatus enables, in particular, combined synthesizer and baseband hopping. The fact that baseband and synthesizer hopping can be employed with the apparatus, in particular as a result of the combination of both methods, a particularly high degree of variability for the frequency hopping, which is greatly advantageous, in particular for low susceptibility to interference and good utilization of the available channels.

In a particularly advantageous manner, in an existing base station according to the prior art, those hybrid combiners whose outputs are assigned to the antennas can be exchanged for the broadband combiners according to the invention without a high outlay, the distinct power gain directly achieved as a result of this being associated with relatively low costs.

In a preferred embodiment, the first and second combiners are designed as hybrid combiners and the third combiner is designed as a broadband combiner, thereby obtaining an advantageous compromise between power gain and variability of the frequency hopping. It is also possible to design the first and second combiners as broadband combiners and the third combiner as a hybrid combiner.

In a development of the invention, at least one of the two filters is realized by a bandpass filter. A bandpass filter allows only signals of a predetermined frequency band to pass (passband) and thereby brings about a particularly effective separation behaviour. In this embodiment, the first and second passbands or frequency bands are preferably of different widths. In alternative embodiments, use is made of high- and/or low-pass filters, which are less expensive than bandpass filters.

The first and second frequency ranges are preferably separated from one another by a guard band, thereby achieving a high degree of selectivity between the two frequency ranges.

In a particularly preferred development, the transmitting/receiving apparatus according to the invention comprises a diplexer having three terminals. The first terminal is assigned to the output of the broadband combiner and receives from the latter the signals to be transmitted, which signals are passed on to the third terminal of the diplexer, which is assigned to the antenna, in order to be radiated. The diplexer serves for separating frequencies of a transmission band from frequencies of a reception band, the signals received via the transmitting/receiving antenna being fed to the second terminal of the diplexer, which is assigned to a receiving device.

A developed embodiment of the invention is realized by a transmitting/receiving cell, which comprises two transmitting/receiving apparatuses according to the invention. Such a cell comprises eight transmitters, with the result that transmission can be effected simultaneously on eight channels e.g. for eight radio links. In this development, baseband hopping can be employed in combination with synthesizer hopping advantageously across all eight amplifiers. In the transmitting/receiving cell described above, the four frequency ranges covered by the two broadband combiners are preferably selected in such a way that the first frequency range of the first transmitting/receiving apparatus contains the lowest frequencies, and then the first frequency range of the second transmitting/receiving apparatus contains the next higher frequencies, then the second frequency range of the first transmitting/receiving apparatus and then the second frequency range of the second transmitting/receiving apparatus, the individual frequency ranges not overlapping. This automatically ensures the guard band between the two frequency ranges of each transmitting/receiving apparatus, the said guard band in this embodiment at least having the width of the frequency band of the respective other transmitting/receiving apparatus.

Ir. an alternative embodiment, the first frequency range of the first transmitting/receiving apparatus overlaps the first frequency range of the second transmitting/receiving apparatus, and/or the second frequency range of the first transmitting/receiving apparatus overlaps the second frequency range of the second transmitting/receiving apparatus. The frequency band made available for transmission is thereby utilized even more effectively.

A developed embodiment unites at least two or three transmitting/receiving cells in a transmitting/receiving station, in which each cell is assigned an angular range of preferably 180° and/or 120°. As a result, it is possible for the entire angular range of 360° to be covered and transmission to be effected in all horizontal directions.

In particular, the transmitting/receiving cell described above enables variable frequency hopping. In the case of the method for frequency hopping according to the invention, a link for the transmission of electromagnetic signals between two call subscribers, which link is maintained over a large number of time intervals, changes over the transmission or carrier frequency by changing over from one transmission channel to another. A changeover of the transmission channel is in this case performed e.g. by detuning the transmitter, in other words synthesizer hopping takes place. A changeover of the transmission channel is, however, also carried out by baseband hopping, in other words a changeover of the assignment of the link from one transmitter to another. It is alternatively possible to change over the transmitter and at the same time maintain the transmission channel, provided that the corresponding frequency ranges overlap. The changeovers take place from one time interval to a following time interval. Since a time interval (approximately 500 µs in the GSM900 standard) is very short in comparison with the duration of the link, a multiplicity of transmitting and/or frequency changeovers is possible during the link. The high degree of variability of the combined synthesizer and baseband hopping can be employed in particular with the apparatus according to the invention, which is particularly advantageous.

The invention is explained in more detail below using exemplary embodiments and with reference to the drawings.

In the figures:
- Fig. 1: shows a block diagram of the transmitting/receiving cell with eight transmitters,
- Fig. 2: shows a frequency diagram of a preferred embodiment of the passbands of the transmitting/receiving cell from Fig. 1,
- Fig. 3: shows a frequency diagram of an alternative embodiment of the passbands of the transmitting/receiving cell from Fig. 1, and
- Fig. 4: shows a frequency diagram of a further alternative embodiment of the passbands of the transmitting/receiving cell from Fig. 1.

The preferred embodiments are explained comprehensively below with reference to the figures.

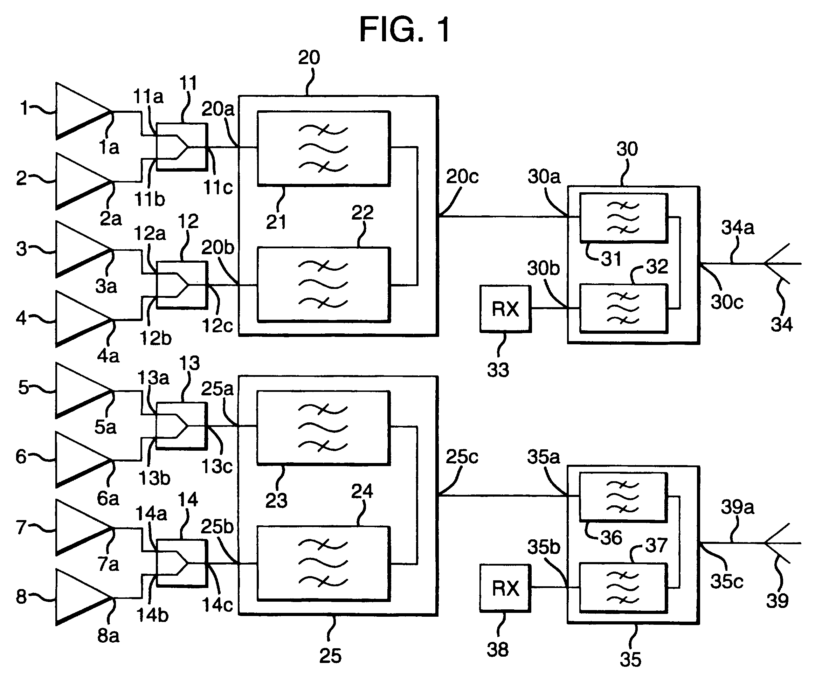

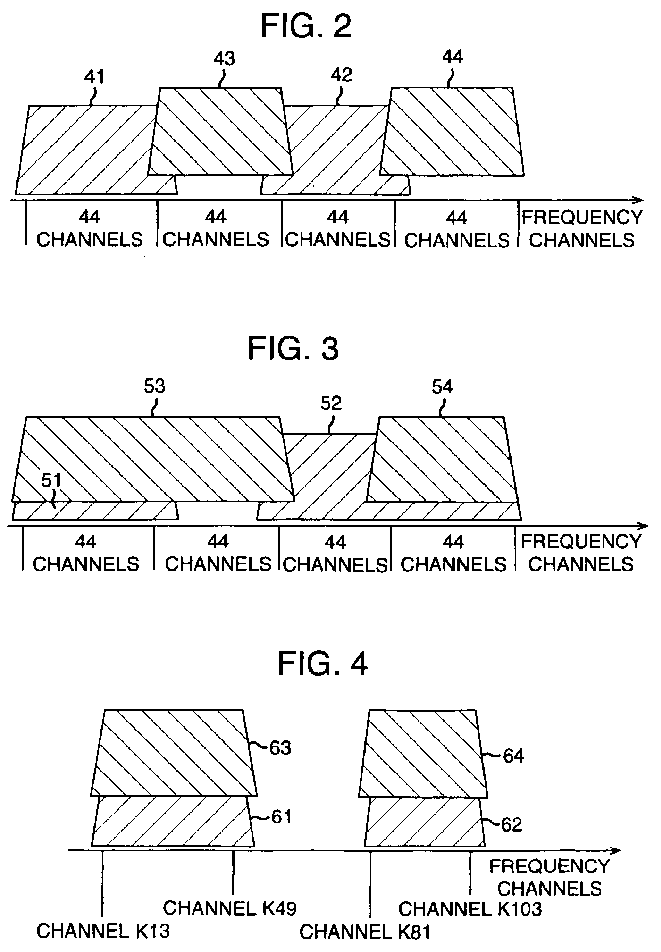

Fig. 1 shows a transmitting/receiving cell according to the invention with eight transmitters 1 to 8. Four hybrid combiners 11 to 14 each having two inputs 11a, 11b, 12a, 12b, 13a, 13b, 14a and 14b and each having an output 11c, 12c, 13c and 14c are illustrated, the outputs 1a to 8a of the transmitters 1 to 8 being connected correspondingly to the inputs 11a, 11b, 12a, 12b, 13a, 13b, 14a, and 14b, respectively, of the hybrid combiners 11 to 14. The outputs 11c to 14c of the hybrid combiners 11 to 14 are connected to inputs 20a, 20b, 25a and 25b, respectively, of a first and second broadband combiner 20 and 25, respectively. The broadband combiner 20 contains two bandpass filters 21 and 22, the outputs of the bandpass filters 21 and 22 being connected to an output 20c of the broadband combiner 20. The broadband combiner 25 contains two bandpass filters 23 and 24, the outputs of the bandpass filters 23 and 24 being connected to an output 25c of the broadband combiner 25. The output 20c of the broadband combiner 20 is connected to a first terminal 30a of a first diplexer 30. The second terminal 30b of the diplexer 30 is connected to a first receiving device 33. The third terminal 30c of the diplexer 30 is connected to the transmitting/receiving antenna 34 via an antenna lead 34a. The diplexer 30 contains two bandpass filters 31 and 32. Signals transmitted by the four transmitters 1 to 4 are combined in pairs by means of the hybrid combiners 11 and 12 and furthermore combined by the broadband combiner 20 and fed to the output 20c. The signals are thereupon fed or conducted via the first diplexer 30 and the antenna lead 34a to the transmitting/receiving antenna 34, in order to be radiated by the latter. If the four transmitters 1 to 4 operate at different frequencies in each case, all four transmitters 1 to 4 can transmit simultaneously. Each of the transmitters 1 to 4 can transmit on channels of a specific frequency range, e.g. forty-four channels in each case (see Fig. 2). In this case, the passband of the bandpass filter 21 is matched to the frequency range of the transmitters 1 and 2 and the passband of the bandpass filter 22 is matched to the transmission range of the transmitters 3 and 4. The passbands of the bandpass filters 21 and 22 do not overlap, in order to ensure sufficient decoupling of the transmitters 1 and 2 from the transmitters 3 and 4. It has been found that a selectivity of approximately 20 dB between the bandpass filters 21 and 22, and 23 and 24, is sufficient to decouple the transmitters from one another. Signals received by the antenna 23 are fed via the antenna lead 34a and via the first diplexer 30 to a receiving device (RX) 33. The first diplexer 30 serves for separating the signals to be transmitted and the received signals. The lower half of the apparatus with the transmitters 5 to 8, the hybrid combiners 13 and 14, the bandpass filters 23 and 24, a second diplexer 35 having three terminals 35a, 35b and 35c and also two bandpass filters 36 and 37, an antenna lead 39a and an antenna 39 is constructed in an equivalent manner to the upper half, described above, in the illustration of the apparatus. In this case, the passbands of the bandpass filters 23 and 24 likewise do not overlap one another, but can be chosen independently of the passbands of the bandpass filters 21 and 22. Various exemplary embodiments for a choice of the passbands of the four bandpass filters 21 to 24 are elucidated in further detail in Figures 2 to 4.

The transmitters 1 to 8 each comprise a transmission amplifier having a transmission power of approximately 40 W in each case. The hybrid combiners 11 to 14 each have a power loss of approximately 3.3 dB, the broadband combiner has a power loss of approximately 0.7 dB, the diplexers 30 and 35 have a power loss of approximately 1.0 dB in each case, and the antenna leads 34a and 39a have a power loss of approximately 1.0 dB in each case. As a result, the total attenuation of a transmission path amounts to approximately 6 dB, that is to say an attenuation that is reduced by approximately 2.6 dB compared with the prior art described in the introduction. Consequently, in an extremely advantageous manner, the transmitting/receiving apparatus according to the invention achieves a radiated transmission power of approximately 10 W with an amplifier power of 40 W per transmitter. Compared with the prior art described above, this means a transmission power which is increased by 82%, in conjunction with a greatly reduced power loss with a corresponding lower degree of thermal loading on the apparatus. The apparatus can nevertheless be operated with combined synthesizer and baseband hopping.

Fig. 2 shows symmetrical coverage of the transmission channels as a first embodiment of the distribution of the passbands of the transmitting/receiving cell from Fig. 1. The transmission channels are subdivided into four equal-sized ranges or intervals which each cover forty-four transmission channels. The four passbands 41, 42, 43, and 44 of the corresponding four bandpass filters 21, 22, 23 and 24, respectively, are illustrated. The lowest passband 41 and the third lowest passband 42 are assigned to the first antenna 34 and separated from one another by the second lowest passband 43, which is assigned to the second antenna 39. The second lowest passband 43 and the highest passband 44, which are both assigned to the second antenna 39, are separated from one another by the passband 42. With this symmetrical frequency coverage, it is possible to effect transmission on all one hundred and seventy-six channels. At the same time, sufficiently wide guard bands are in each case present between the passbands 41 and 42, and the passbands 43 and 44, as a result of the reciprocal coverage. The transmitters 1 and 2 transmit in the passband 41 and in this case can implement synthesizer hopping in a frequency range comprising forty-four channels. This applies analogously to the transmitters 3 and 4, to the transmitters 5 and 6, and to the transmitters 7 and 8, which can each transmit and implement synthesizer hopping in the passband 42, in the passband 43 and in the passband 44, respectively.

Fig. 3 shows an alternative embodiment of the coverage of the one hundred and seventy-six channels, which is again divided into four equal-sized intervals each having forty-four channels. In a similar manner tc Fig. 2, passbands 51, 52, 53 and 54 of the bandpass filters 21, 22, 23 and 24, respectively, from Fig. 1 are illustrated. The passband 51 covers the lowermost forty-four channels, the passband 52 covers the uppermost eighty-eight channels, the passband 53 covers the lowermost eighty-eight channels and the passband 54 covers the uppermost forty-four channels. A broad guarc band nevertheless exists between the passbands 51 and 52, which are assigned to the first antenna 34, and the passbands 53 and 54, which are assigned to the second antenna 39. The transmitters 1 and 2 transmit on a respective one of the forty-four channels of the passband 51, the transmitters 3 and 4 transmit on a respective one of the eighty-eight channels of the passband 52, the transmitters 5 and 6 transmit on a respective one of the eighty-eight channels of the passband 53 and the transmitters 7 and 8 transmit on a respective one of the forty-four channels of the passband 54. As a result of this asymmetrical coverage of the one hundred and seventy-six channels, the transmitters 3 and 4, and 5 and 6, can implement frequency hopping in twice as many channels, compared with the linear coverage from Fig. 2. Consequently, in the frequency ranges in which the passbands 51 and 53, and 52 and 54, overlap, that is to say the lowermost and the uppermost forty-four channels, a total of four transmitters can transmit simultaneously. Consequently, as a result of this asymmetrical coverage, the ranges in which the transmitters 3 and 4, and 5 and 6, can implement synthesizer hopping are distinctly expanded, which leads to more flexible and hence better utilization of the available channels.

Fig. 4 shows a further alternative embodiment of the frequency coverage. In this embodiment, the channels K13 to K49 and the channels K81 to K103 are available for transmission. The thirty-seven channels from channel K13 to channel K49 are covered by the passbands of the bandpass filters 21 and 23, that is to say by the transmitters 1 and 2, and 5 and 6, respectively, from Fig. 1. In an equivalent manner, the transmitters 3 and 4, and 7 and 8, from Fig. 1 transmit on channels K81 to K103, which channel range is completely covered by the passbands 62 and 64 of the bandpass filters 22 and 24, respectively. In a similar manner to the concept from Fig. 3, the overlapping of the passbands 61 and 63 is unproblematic since the range 61 is assigned to the first antenna 34 and the range 63 is assigned to the second antenna 39. The same applies to the ranges 62 and 64. Despite the complete overlap of the passbands 61 and 63, and 62 and 64, a sufficient guard band is present between the ranges assigned to the same antenna, that is to say the passbands 61 and 62, and 63 and 64. In this case, too, it is possible to transmit simultaneously with four transmitters in each case in the frequency ranges between the channels K13 and K49, and the channels K81 to K103.

All three instances of frequency coverage from Figs 2 to 4 enable synthesizer hopping, for which purpose the time axis is divided into intervals of e.g. 500 µs. A transmitter changes over its transmission frequency, preferably according to a predefined scheme, from one time interval to the next within the frequency band of the bandpass filter assigned to it. This synthesizer hopping can be combined in many ways with baseband hopping, in particular with the apparatus described. The link can be provided via any channel made available (for example one hundred and seventy-six channels in the examples of Figs 2 and 3).

It is evident to a person skilled in the art that the transmitting/receiving apparatus of the embodiment from Fig. 1 is to be understood as an example and the transmitting/receiving apparatus according to the invention can, in particular, be combined in diverse ways to form larger units. Likewise, the embodiments of frequency coverage and the associated ranges for frequency hopping are to be understood only as examples.

## Claims

1. Transmitting/receiving apparatus for electromagnetic signals, comprising
four transmitters (1, 2, 3, 4) each having an output (1a, 2a, 3a, 4a);
a first and second combiner (11, 12) each having two inputs (11a, 11b, 12a, 12b) and each having an output (11c, 12c), each of the inputs (11a, 11b, 12a, 12b) being assigned to the output (1a, 2a, 3a, 4a) of a respective one of the transmitters (1, 2, 3, 4);
a third combiner (20) having a first and second input (20a, 20b), which are assigned to the output (11c, 12c) of the first and second combiner (11, 12) respectively, and having an output (20c), and
an antenna (34) for transmitting and/or receiving electromagnetic signals, which is assigned to the output (20c) of the third combiner (20),
characterized in that
at least one of the combiners (11, 12, 20) is a broadband combiner (20) which comprises a first and second filter (21, 22) and which first and second filters (21, 22) allow signals of a first and second frequency range (51, 52), respectively, to pass, the first and/or second frequency range covering a plurality of transmission channels in order to enable synthesizer hopping.

2. Transmitting/receiving apparatus according to Claim 1, in which the first and/or second combiner (11, 12) are a first and/or second hybrid combiner and the third combiner (20) is a broadband combiner.

3. Transmitting/receiving apparatus according to Claim 1 or 2, in which the first and second frequency ranges (51, 52) do not overlap and, in particular, are separated from one another by a guard band.

4. Transmitting/receiving apparatus, according to one of the preceding claims, in which the first and/or the second filter (21, 22) are high-pass filters or low-pass filters.

5. Transmitting/receiving apparatus according to one of the preceding claims, in which the first and/or the second filter (21, 22) are bandpass filters (21, 22) which define a first and second passband (51, 52), respectively.

6. Transmitting/receiving apparatus according to Claim 5, in which the first and second passbands (51, 52) are of different width.

7. Transmitting/receiving apparatus, according to one of the preceding claims, which furthermore comprises a diplexer (30) having a first, second and third terminal (30a, 30b, 30c), the first terminal (30a) being assigned to the output (20c) of the third combiner (20), the second terminal (30b) being assigned to a receiving apparatus (33) and the third terminal (30c) being assigned to the antenna (34).

8. Transmitting/receiving cell, which comprises two transmitting/receiving apparatuses according to Claim 7.

9. Transmitting/receiving cell according to Claim 8, in which the first frequency range (51) of the first transmitting/receiving apparatus overlaps the first frequency range (53) of the second transmitting/receiving apparatus, and/or the second frequency range (52) of the first transmitting/receiving apparatus overlaps the second frequency range (54) of the second transmitting/receiving apparatus.

10. Transmitting/receiving station, which comprises a plurality of transmitting/receiving cells according to either of Claims 8 and 9, preferably two or three such cells, in which each transmitting/receiving cell is assigned an angular range, preferably 180° and/or 120° for transmission and/or reception.

11. Method for frequency hopping, in particular with an apparatus according to one of the preceding claims, in which method a first transmitter (1) is permanently assigned to a first frequency range (51) and a second transmitter (3) is permanently assigned to a second frequency range (52), furthermore a link for the transmission of electromagnetic signals is assigned to the first transmitter (1) in a first and second time interval, which first transmitter changes over the transmission channel between the first and second time intervals, and the link is assigned to the second transmitter (3) in a third time interval.

12. Method according to Claim 11, in which the transmission channel of the first transmitter (1) in the second time interval and the transmission channel of the second transmitter (3) in the third time interval are different.

13. Method according to Claim 11 or 12, in which the first and/or second frequency range (51, 52) comprise a plurality of transmission channels.

14. Method according to one of the preceding method claims, in which the first and second frequency ranges (51, 52) are chosen such that they do not overlap.

15. Method according to one of the preceding method claims, in which the first and second transmitters (1, 3) are assigned to a first antenna (34), a third transmitter (5) is assigned to a second antenna (39) and the link is assigned to the third transmitter (5) in a fourth time interval.

16. Method according to Claim 15, in which the third transmitter (5) is assigned to a third frequency range (53), which comprises a plurality of channels.

17. Method according to Claim 15 or 16, in which the third frequency range (53) is chosen such that it overlaps the first and/or second frequency range (51, 52).

18. Method according to Claim 17, in which the first and third frequency ranges (61, 63) are chosen to be identical.
